# EUROPEAN PATENT APPLICATION

(11) **EP 1 643 239 A1**
(43) Date of publication of application: **05.04.2006**
(21) Application number: 05019438.0
(22) Date of filing: 07.09.2005
(51) Int. Cl.: G01N 21/64, C12M 1/34, G01N 33/50

(54) **Screening apparatus**

(30) Priority: 30.09.2004 JP 2004286373
(71) Applicant: Yokogawa Electric Corporation, Tokyo 180-8750 (JP)
(72) Inventor: Anyoji, Akihiko, Musashino-shi Tokyo 180-8750 (JP); Hori, Katsuyoshi, Musashino-shi Tokyo 180-8750 (JP); Mikuriya, Kenta, Musashino-shi Tokyo 180-8750 (JP)
(74) Representative: Grünecker, Kinkeldey, Stockmair & Schwanhäusser Anwaltssozietät

(57) **Abstract**

A screening apparatus detects images of a plurality of wells provided at a plate to perform screening in a new drug process. The screening apparatus has a plurality of detecting portions which are fixedly arranged and individually detect images of wells different from each other, a movable stage on which the plate is mounted, a carrying portion which moves the stage so that positions of the wells of the plate correspond with measuring positions of the detecting portions, and a detection controlling portion which controls the detecting portions to simultaneously detect the images of the wells different from each other.

## Description

### CROSS-REFERENCE TO RELATED APPLICATIONS

This application is based upon and claims the benefit of priority from the prior Japanese Patent Applications No. 2004-286373, filed on September 30, 2004, the entire contents of which are incorporated herein by reference.

### Background of the Invention

### Field of the Invention

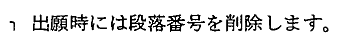 The present invention relates to a screening apparatus used in a drug discovery process, which enables to perform a screening process at high speed.
The present invention can be utilized not only for screening but for a target search in the same drug discovery process.

### Description of the Related Art

JP-T-1-2002-525603 is referred to as a related art of a screening apparatus in a drug discovery process.

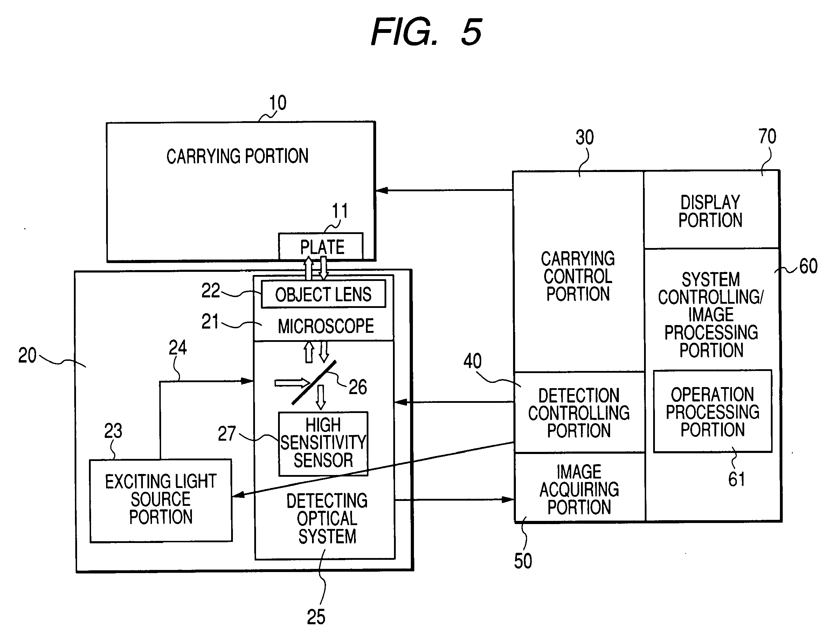

Fig. 5 is a block diagram showing an example of a screening apparatus based on a screening system shown in JP-T-1-2002-525603. There is used a high contents screening (HCS) apparatus for putting a compound group which is a candidate of a drug to a cell and testing how the cell reacts therewith by an image in secondary screening in a drug discovery process.

According to the apparatus shown in Fig. 5, a single lump [hereinafter, referred to as well] is constituted by about 1000 pieces of cell groups and there is used a plate 11 aligned with the wells in a shape of an array of vertical 10 columns, horizontal 10 rows or the like. The plate 11 is moved to above a microscope 21 by a carrying portion 10 and a single well in the plate 11 is arranged above an object lens 22 in the microscope 21. The plate 11 is controlled to move by a carrying control portion 30.

Exciting light guided by an optical fiber 24 or the like from an exciting light source portion 23 constituted by laser or the like is reflected by a dichroic mirror 26 in a detecting optical system 25 and thereafter applied to the well by passing the object lens 22. A fluorescent marker (protein or the like to which attention is paid) present in the cell in the well emits fluorescence having a long wavelength by applying the exciting light.

The fluorescence is incident on a high sensitivity sensor 27 in the detecting optical system 25 by passing the object lens 22. A signal of the high sensitivity sensor 27 is inputted to an image acquiring portion 50 as an image. Operation of the exciting light source portion 23 and the detecting optical system 25 is controlled by a detection controlling portion 40.

One sheet of the image inputted to the image acquiring portion 50 corresponds to one well and catches about 100 pieces of cells. The image is processed by an operation processing portion 61 of a system controlling/image processing portion 60 and is grasped as a numerical value representing a state of a cell group present in one well. The plate 11 disposed in the carrying portion 10 is controlled by the carrying control portion 30 and respective wells aligned in a shape of vertical and horizontal arrays are successively carried to a predetermined position.

Images are measured with regard to all the wells in this way and based on measured image data thereof, the operation processing portion 61 executes a screening operation for screening a compound group which cannot become a drug from compound groups of candidates of the drug. A display portion 70 displays a provided screening result or the like pertinently by a predetermined style.
Further, the control of the image acquiring portion 50, the system controlling/image processing portion 60, the display portion 70 and respective portions can also be constructed by constitution in which a personal computer substitutes therefor.

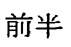 However, the following problem is posed in the screening apparatus of the background art.
The competition of developing a new drug is in a direction of being intensified and high speed formation of the screening process is unavoidable. In order to achieve high speed formation of, for example, 4 times in the system of the background art, the system deals therewith by aligning 4 sets of the screening apparatus. However, cost becomes 4 times or more, further, 4 times or more of an installing area is needed, which poses a very serious problem.

### Summary of the Invention

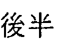 An object of the invention is to provide a screening apparatus achieving high speed formation in detecting an image of a well and enabling a high speed processing of, for example, 4 times as much as that of the background art by one set of screening apparatus.

The invention provides a screening apparatus which detects images of a plurality of wells provided at a plate to perform screening in a new drug process, having: a plurality of detecting portions which are fixedly arranged and individually detect images of wells different from each other; a movable stage on which the plate is mounted; a carrying portion which moves the stage so that positions of the wells of the plate correspond with measuring positions of the detecting portions; and a detection controlling portion which controls the detecting portions to simultaneously detect the images of the wells different from each other.

By operating the plurality of detecting portions in parallel, a measuring amount is increased by an amount of a multiplication of a number of the detecting portions and high speed detection of the image of the well can be achieved. For example, when four detecting portions are provided, four times of the images of the wells can be detected within a time period of measuring by one detecting portion and a measuring speed becomes four times as fast as that in detecting by one detecting portion.

In the screening apparatus, the detecting portions are arranged so that a pitch between detecting portions is an integral multiple of a pitch between the wells in width. In this case, a plurality of the wells can simultaneously be detected in one plate.
In the screening apparatus, when a plurality of the plates are mounted on the stage, the carrying portion moves the stage so that positions of the wells of each plate correspond with the measuring positions of the detecting portions. In this case, the well images of each plate can simultaneously be detected.
In the screening apparatus, the carrying portion rotates the stage, the plurality of plates are mounted to be disposed on a circular ring on the stage, and the detecting portions are fixedly arranged at positions in correspondence with an arrangement of the plates. In this case, the images of the wells of the plurality of plates can simultaneously be detected.

The screening apparatus may has an exciting light source portion which generates exciting light provided to the detecting portions, wherein light output from a single laser light source is split in two or more to be the exciting light, and the detecting portions apply the exciting light to the plate.
In the screening apparatus, the detecting portion may include a Nipkow system cofocal scanner. In this case, the image of the well having higher accuracy can be provided.

The screening apparatus may be used for a target search in a drug discovering process.

According to the screening apparatus, the following advantages are achieved.
(1) Since the plurality of detecting portions are operated in parallel, a speed of detecting the images of the wells is made to be fast by an amount of the number of the detecting portions.
   Further, as the apparatus, although the number of the detecting portions is increased, price or an installing area thereof is not increased. An advantage of achieving high performance is provided.
(2) Single ones of the carrying control portion 30a, the detection controlling portion 40a, the image acquiring portion 50a, the system controlling/image processing portion 60a other than the detecting portions will do.
(3) Even when a stacking function, an incubation function, a pipeting function and the like are added to the screening apparatus, price and installing area of a single apparatus will do.

### Brief Description of the Drawings

Figs : 1A and 1B illustrate views of a plate used for a screening apparatus of the invention;
Fig. 2 is a block diagram showing the first embodiment of the screening apparatus of the invention;
Fig. 3 is a block diagram showing the second embodiment of the screening apparatus of the invention;
Fig. 4 is a block diagram showing the third embodiment of the screening apparatus of the invention; and
Fig. 5 is a block diagram of a screening apparatus of a related art.

### Detailed Description of the Preferred Embodiments

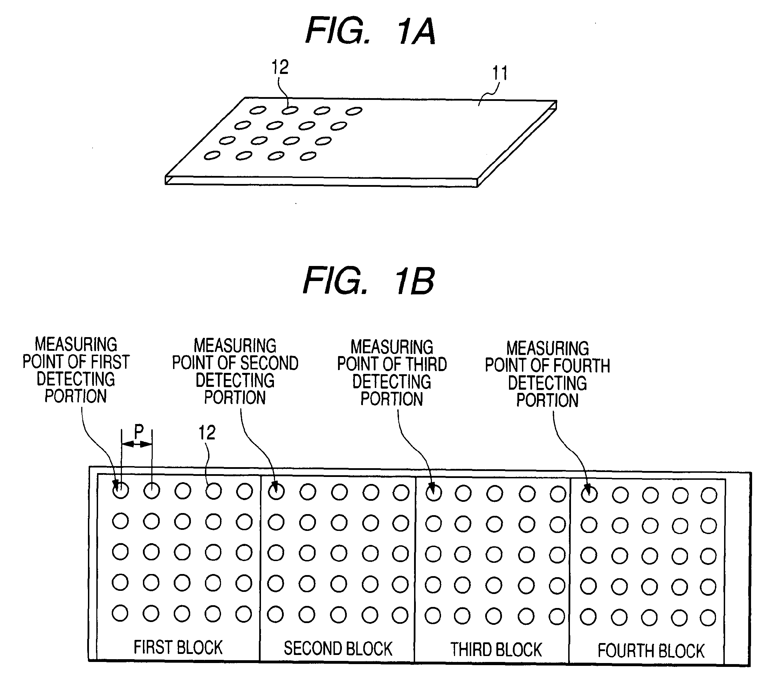

Embodiments of the screening apparatus of the invention will be explained with reference to the drawings. In the embodiments of the invention, a single one plate 11 having a plurality of wells 12 as shown by Fig. 1A is used for the screening apparatus. The plate 11 is divided into several blocks as shown by Fig. 1B. In Fig. 1B, the plate 11 is divided into four blocks (the first to the fourth blocks). Further, there are prepared a number [4 pieces in the case of Fig. 1B (b)] of detecting portions for detecting fluorescence by applying exciting light thereto and as shown by Fig. 1B. A measuring point of each detecting portion is set to correspond to a start well position of the each block. The detecting portions are arranged so that a pitch between detecting portions is an integral multiple of pitch ("p" in Fig. 1B) between the wells in width. The setting can be carried out by fixedly arranging the detecting portions having the above configuration. Parallel operation is executed in controlling the four detecting portions and inputting images.
By respectively detecting the images of the wells of the respective blocks by the four detecting portions, the images of the wells of all of the 4 blocks can be measured by a time period required for measuring all of the wells of the single block.

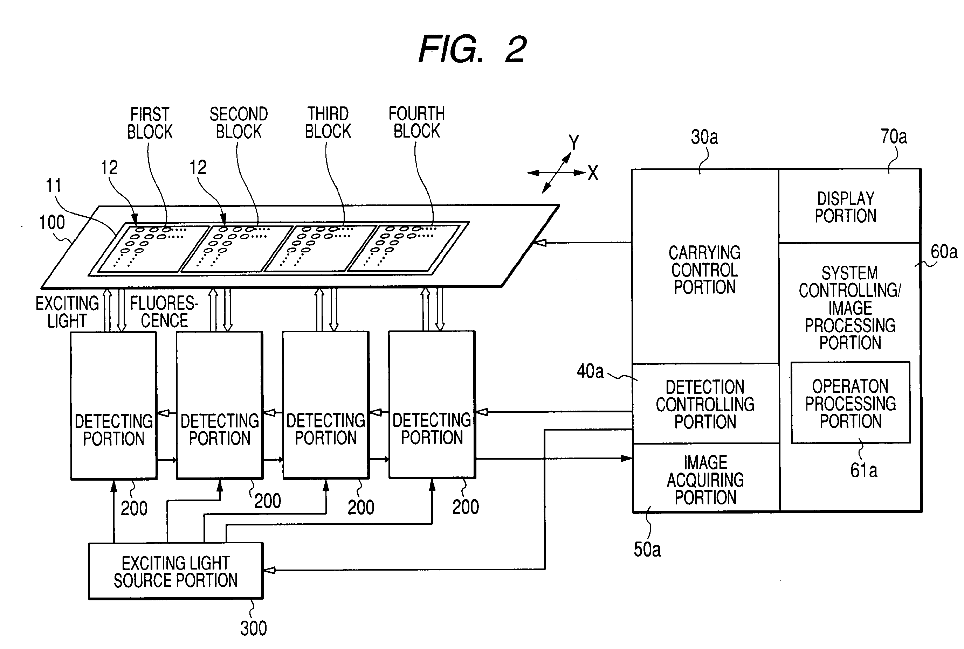

Fig. 2 is a block diagram showing the first embodiment of the screening apparatus of the invention. In Fig. 2, numeral 100 denotes a stage. The stage 100 is formed by a material of transmitting exciting light and fluorescence, is constituted movably in a horizontal direction (XY direction in Fig. 2), and is controlled to be driven by a carrying control portion 30a. The plate 11 is mounted on the stage 100. The plate 11 is formed by a material capable of transmitting exciting light and fluorescence at least at a portion of the well.

Numeral 200 denotes the detecting portion. The detecting portion 200 detects fluorescence emitted from the plate 11 by applying exciting light to the plate 11. The detecting portion 200 includes the microscope 21 and the detecting optical system 25 shown in Fig. 5. In the embodiment, four detecting portions 200 are provided in the screening apparatus which uses the plate 11 having four blocks.
The respective detecting portions 200 are fixedly arranged at predetermined positions to be opposed to the respective blocks of the plate 11. The detecting portions 200 operate in parallel under the control of a detection controlling portion 40a, and simultaneously detect images of wells 12 of the respective blocks. The detected image is inputted to an image acquiring portion 50a.

Numeral 300 denotes an exciting light source portion having a single laser light source (not illustrated). Laser light output from the laser light source is split in two or more (four in the embodiment) in the exciting light source 300. That is, the exciting light source 300 - outputs multi laser light. Each of the output light is respectively guided to each of the detecting portions 200.
Further, the detecting portion 200 and the exciting light source portion 300 are respectively controlled by a detection controlling portion 40a.

Numeral 50a denotes an image acquiring portion. The image acquiring portion 50a reads each output image signal of the four detecting portions 200 and converts the output image signals into image data to save therein.
Numeral 60a denotes a system controlling/image processing portion. The system controlling/image processing portion controls respective portions of the screening apparatus, reads image data saved in the image acquiring portion 50a, and executes an image processing at an operation processing portion 61. The operation processing portion 61 executes a processing of conversion of states of cell groups for each well to a numerical value, and screens out a compound group which is not effective as a drug from compound groups of candidates of the drug based on the data obtained from the system controlling/image processing portion 60a.
Numeral 70a denotes a display portion. The display portion 70a displays a provided screening result or the like by a predetermined style.

The operation of the screening apparatus will be explained as follows. First, the detecting portions 200 are arranged so that the pitch between the detecting portions 200 is an integral multiple of the pitch p between the wells 12 in width, and measuring points of the detecting portions 200 are set to correspond to a start well positions of each block (for example, well positions on left upper sides of each block as shown by Fig. 1B).

Next, the exciting light source portion 300 and the detecting portions 200 operating in parallel are started by the detection controlling portion 40a to start to measure images of the start wells. Fluorescent image signals of the wells 12 detected by the respective detecting portions 200 are inputted to the image acquiring portion 50a and saved as image data. When the acquisition of image data is finished, the system controlling/image processing portion 60a moves the stage 100 so that the measuring points by the respective detecting portions 200 come to positions of succeeding wells to be measured by controlling the carrying control portion 30a.

After moving the stage 100, image measuring operation similar to the above-described is carried out again.
Images are measured for all the wells of the plate 11 by repeatedly executing such an operation. Thereafter, the operation processing portion 61a converts states of cell groups for respective wells to numerical value, and screens out a compound group which is not effective as a drug from compound groups of candidates of the drug based on the data. Further, the conversion of the states of cell groups for the wells to the numerical value may be carried out at each time of acquiring the images of each well. :
A screening result obtained in this way is controlled by the system controlling/image processing portion 60a to display at the display portion 70a by a predetermined display style.

According to above-described measuring operation, since the four detecting portions are operated in parallel, the measurement of the plate 11 is performed at high speed, that is, four times of measuring period compared with the related art.

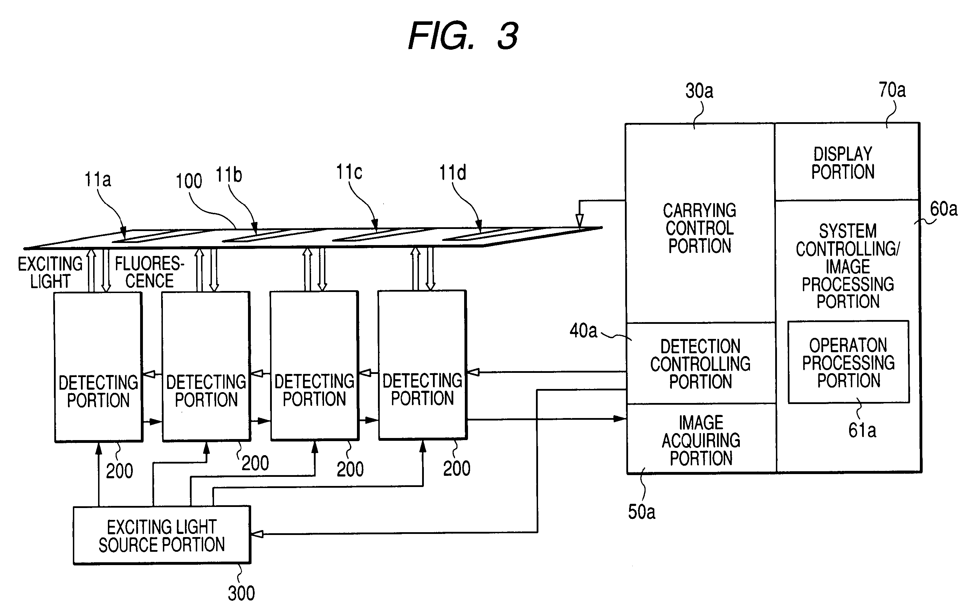

Fig. 3 is a block diagram showing the second embodiment of the screening apparatus of the invention in which multi-plates are simultaneously read. A difference thereof from the first embodiment shown in Fig. 2 resides in that although a single piece of the plate 11 is mounted on the stage 100 in the first embodiment, four pieces of plates 11a, 11b, 11c, 11d (each of plates is same with the plate 11 in the first embodiment) are mounted on the single stage 100 in the second embodiment as shown in Fig. 3.
Measuring points by the respective detecting portions 200 are set to correspond to start well positions of the respective plates, and the respective wells are measured by operation similar to that of the first embodiment shown in Fig. 2.
In the second embodiment, each of the detecting portions 200 measures all of wells of each plate. However, since the four detecting portions 200 are operated in parallel, four plates 11a, 11b, 11c, 11d are measured for the period of the measurement of the plate in the related art. That is, substantial measuring period becomes four times as much as that of the related art.

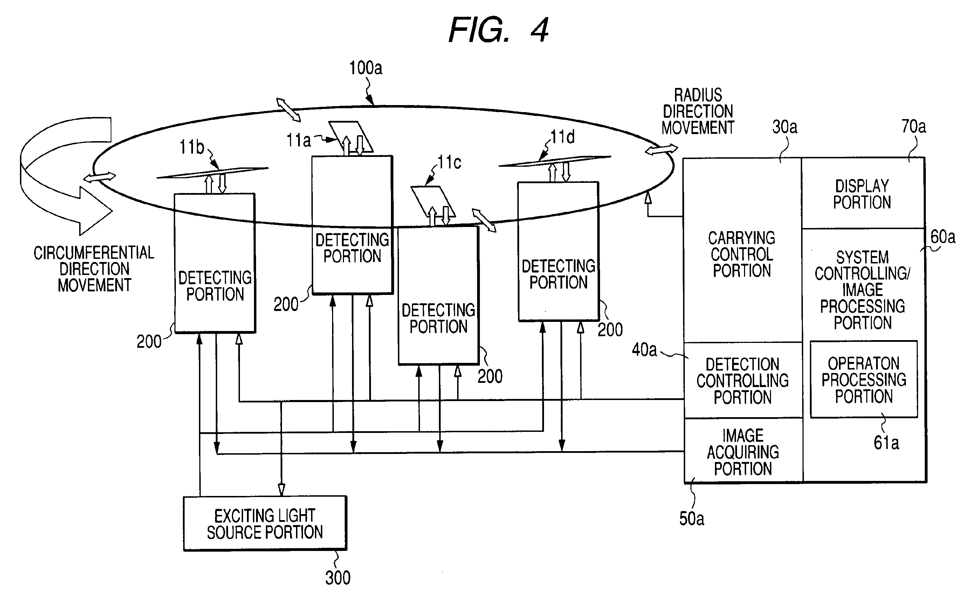

Fig. 4 is a block diagram showing the third embodiment of the screening apparatus of the invention. The screening apparatus of the third embodiment is of a rotating stage type. In the third embodiment, four plates are mounted on a rotating stage 100a, which is in a shape of a circular plate, to dispose scatteredly on the same circular ring. The four detecting portions 200 are arranged at four positions on the same circular ring to be opposed to wells of each plate. Further, the rotating stage 100a rotates in a circumferential direction and moves in a radius direction.
According to the third embodiment, since the rotating stage 100a rotates and moves in XY direction by being controlled by the carrying control portion 30a, wells of each plate can be measured at high speed by the detecting portions 200 fixedly arranged as well as the above embodiments.

Further, the invention is not limited to the above-described embodiments but further includes numbers of changes and modifications within the range not deviated from the essence.
For example, a number of the detecting portions 200 may be other than four. However, the number of the detecting portions 200 is same with the number of the divided blocks in Figs. 1A and 1B and Fig. 2 as well as the number of the plates in Fig. 3 and Fig. 4.

Further, the detecting optical system 25 of the detecting portion 200 may be a cofocal scanner of a Nipkow system. An example of the cofocal scanner of a Nipkow system is described in JP-A-5-60980.
Further, the screening apparatuses can be utilized not only for the screening but for a target search in the drug discovery process.

## Claims

1. A screening apparatus which detects images of a plurality of wells provided at a plate to perform screening in a new drug process, comprising:
a plurality of detecting portions which are fixedly arranged and individually detect images of wells different from each other;
a movable stage on which the plate is mounted;
a carrying portion which moves the stage so that positions of the wells of the plate correspond with measuring positions of the detecting portions; and
a detection controlling portion which controls the detecting portions to simultaneously detect the images of the wells different from each other.

2. The screening apparatus according to the claim 1,
wherein the detecting portions are arranged so that a pitch between detecting portions is an integral multiple of a pitch between the wells in width.

3. The screening apparatus according to claim 1,
wherein when a plurality of the plates are mounted on the stage, the carrying portion moves the stage so that positions of the wells of each plate correspond with the measuring positions of the detecting portions.

4. The screening apparatus according to claim 3,
the carrying portion rotates the stage,
the plurality of plates are mounted to be disposed on a circular ring on the stage, and
the detecting portions are fixedly arranged at positions in correspondence with an arrangement of the plates.

5. The screening apparatus according to claim 1, further comprising:
an exciting light source portion which generates exciting light provided to the detecting portions,
wherein light output from a single laser light source is split in two or more to be the exciting light, and
the detecting portions apply the exciting light to the plate.

6. The screening apparatus according to claim 1,
wherein the detecting portion includes a Nipkow system cofocal scanner.

7. The screening apparatus according to claim 1,
the screening apparatus is used for a target search in a drug discovering process.
